# EUROPEAN PATENT APPLICATION

(11) **EP 1 404 060 A2**
(43) Date of publication of application: **31.03.2004**
(21) Application number: 03256149.0
(22) Date of filing: 30.09.2003
(51) Int. Cl.: H04L 12/28

(54) **Wireless communication terminal**

(30) Priority: 30.09.2002 JP 2002285809; 30.09.2002 JP 2002287233
(71) Applicant: Kabushiki Kaisha Toshiba, Tokyo 105-8001 (JP)
(72) Inventor: Wakutsu, Takashi, Int. Prop. Div., Toshiba Corp., Tokyo 105-8001 (JP); Tomizawa, Takeshi, Int. Prop. Div., Toshiba Corp., Tokyo 105-8001 (JP); Matsuo, Ryoko, Int. Prop. Div., Toshiba Corp., Tokyo 105-8001 (JP)
(74) Representative: Granleese, Rhian Jane

(57) **Abstract**

A wireless communication terminal, comprising: a software defined radio (1) having a first wireless unit (11) which transfers a wireless signal, a signal processor (12) including a reconfigurable unit which can change signal processing contents of the wireless signal transferred by the first wireless unit, a signal processing controller (13) which controls reconfiguration of the signal processing contents for the reconfigurable unit, and a first controller (14) which controls the signal processor and the signal processing controller; a cellular type wireless equipment (3) having a second wireless unit (17) which transfers the wireless signal by a cellular method, and a second controller (16) which controls the second wireless unit (17); and a control signal line (L1) which transfers a control signal necessary for establishment of communication between the first (14) and second (16) controllers.

## Description

### BACKGROUND OF THE INVENTION

### Field of the Invention

The present invention relates to a wireless communication terminal including a software defined radio.

### Related Art

A dual mode wireless terminal that can be used for both a cellular phone and PHS (Personal Handy Phone System) has been currently developed and put on the market. This is manufactured by housing two different hardware corresponding to two different wireless systems (i.e. cellular and PHS) in one housing. It was impossible to add another new wireless system, or update existing function already built therein.

As one method for solving the above problems, wireless equipment capable of changing the wireless characteristics such as modulation method and transmission rate only by replacing the software and without changing the hardware, so-called "software defined radio", has been proposed by realizing a part of the functions of the wireless equipment by using a digital signal processor (DSP) or the like, and the practical use thereof is now under study (see Japanese Patent Publication No. 2001-189763).

By using the technique of the software defined radio, it is possible to add new wireless systems by replacing the software and changing the definition of the programmable hardware. It is also possible to introduce the newest function into the wireless terminal. Thereby it is considerably improving the convenience of the wireless equipment.

Recently, the information delivery service at a spot area becomes popular. In this kind of service, the service providers deliver requested information to users who requested the information beforehand. The user, who has a wireless communication terminal having a function of mobile phones and a simple wireless equipment like a wireless LAN, sends the request message to the service provider for downloading the information by using the mobile phone get information. The user gets the requested information by using the simple wireless equipment.

The technology of software defined radio may be suitable for the above mentioned wireless communication terminal having a so-called "multi mode" because of its flexibility.

### SUMMARY OF THE INVENTION

It is an object of the present invention to provide an improved wireless communication terminal comprising a plurality of wireless equipments including the software defined radio.

A wireless communication terminal according to an embodiment of the present invention, comprising:
a software defined radio having a first wireless unit which transfers a wireless signal, a signal processor including a reconfigurable unit being able to change signal processing contents of the wireless signal transferred by said first wireless unit a signal processing controller which controls reconfiguration of the signal processing contents for said reconfigurable unit, and a first controller which controls said signal processor and said signal processing controller;
a cellular type wireless equipment having a second wireless unit which transfers a wireless signal by a cellular method, and a second controller which controls said second wireless unit; and
a control signal line which transfers a control signal necessary for establishment of communication between said first and second controllers.

Furthermore, a wireless communication terminal, comprising:
a first software defined radio having a first wireless unit which transfers a wireless signal, a signal processor including a reconfigurable unit being able to change signal processing contents of the wireless signal transferred by said first wireless unit, a signal processing controller which controls reconfiguration of the signal processing contents for said reconfigurable unit, and a first controller which controls said first wireless unit, said signal processor and said signal processing controller;
a second software defined radio having a second wireless unit which transfers the wireless signal in a range narrower than a cellular type equipment, and a second controller which controls said second wireless unit; and
a control signal line which transfers a control signal necessary for establishment of communication between said first and second controllers.

Furthermore, a wireless communication terminal, comprising:
a software defined radio having a first wireless unit which transfers a wireless signal, a signal processor including a reconfigurable unit being able to change signal processing contents of a wireless signal transferred by said first wireless unit, a signal processing controller which controls reconfiguration of the signal processing contents for said reconfigurable unit, and a first controller which controls said first wireless unit, said signal processor and said signal processing controller;
a cellular type wireless equipment having a second wireless unit which transfers the wireless signal by a cellular method, and a second controller which controls said second wireless unit;
a simple wireless equipment having a third wireless unit which transfers the wireless signal in a range narrower than said cellular type wireless equipment, and a third controller which controls said third wireless unit; and
a control signal line which transfers a control signal necessary for establishment of communication between said first, second and third controllers.

Furthermore, a wireless communication terminal, comprising:
a first software wireless terminal having a first wireless unit which transfers a wireless signal, a first signal processor including a first reconfigurable unit being able to change signal processing contents of the wireless signal transferred by said first wireless unit, a first signal processing controller which controls redefinition of the signal processing contents for said first reconfigurable unit, and a first controller which controls said first wireless unit, said first signal processing unit and said first signal processing controller;
a second software wireless terminal having a second wireless unit which transfers a wireless signal, a second signal processor including a second reconfigurable unit which can change signal processing contents of the wireless signal transferred by said second wireless unit, a second signal processing controller which controls reconfiguration of the signal processing contents of said second reconfigurable unit, and a second controller which controls said second wireless unit, said second signal processing unit and said second signal processing controller; and
a control signal line which transfers a control signal necessary for establishment of communication between said first and second controller.

Furthermore, a wireless communication terminal, comprising:
at least one of first transferring units each being provided corresponding to each of at least one of wireless systems to which transmission suspension obligation of radio wave is imposed on a condition prescribed in advance;
at least one of second transferring units each being provided corresponding to each of at least one of wireless systems to which transmission suspension obligation or radio wave is not imposed; and
a transmission suspension controller which when at least one of said first transferring units stops transmission of radio wave by said transmission suspension obligation, supplies a transmission suspension control signal indicating transmission suspension of radio wave for all the other said first and second transferring units;
said first and second transferring units which received said transmission suspension control signal have transmission suspension units which suspend transmission of radio wave, respectively.

Furthermore, a wireless communication terminal, comprising:
at least one of first transferring units each being provided corresponding to each of at least one of wireless systems to which transmission suspension obligation of radio wave is imposed on a condition prescribed in advance;
at least one of second transferring units each being provided corresponding to each of at least one of wireless systems to which transmission suspension obligation of radio wave is not imposed;
at least one of failure detectors each being provided corresponding to each of said second transferring units, which detect a failure of the corresponding second transferring unit; and
a transmission suspension controller which supplies a transmission suspension control signal to all of said first and second transferring units, when determined to be failed by at least one of said failure detectors,
wherein said first and second transferring units have transmission suspension units which suspend transmission of radio wave, upon receiving said transmission suspension control signal.

### BRIEF DESCRIPTION OF THE DRAWINGS

A more complete understanding of the present invention may be obtained by reference to the following Description of the preferred embodiments when taken in conjunction with the accompanying Drawings wherein:
Fig. 1 is a diagram showing the schematic configuration of a wireless communication terminal according to a first embodiment of the present invention.
Fig. 2 is a block diagram showing one example of the internal configuration of the signal processing unit in Fig. 1.
Fig. 3 illustrates one example of formats for a link channel allocation rejection message in the PHS system.
Fig. 4 shows an example of a control sequence when receiving an incoming call in the PHS.
Fig. 5 indicates the cell coverage of the wireless communication terminal in Fig. 1.
Fig. 6 shows one example of the wireless communication system using the wireless communication terminal in Fig. 1.
Fig. 7 is a block diagram showing the schematic configuration of a wireless communication terminal according to a second embodiment of the present invention.
Fig. 8 is a block diagram of a wireless communication terminal, showing a specific example of Fig. 7.
Fig. 9 is a diagram showing the cell coverage of the wireless communication terminal in Fig. 7.
Fig. 10 is a diagram showing another example of the cell coverage of the wireless communication terminal in Fig. 7.
Fig. 11 is a diagram showing one example of a wireless communication system using the wireless communication terminal shown in Fig. 7.
Fig. 12 is a block diagram showing the schematic configuration of a wireless communication terminal according to a third embodiment of the present invention.
Fig. 13 is a block diagram showing the schematic configuration of a wireless communication terminal according to a fourth embodiment of the present invention.
Fig. 14 is a block diagram showing the schematic configuration of a wireless communication terminal according to a fifth embodiment of the present invention.
Fig. 15 is a block diagram showing the schematic configuration of a wireless communication terminal according to the sixth embodiment of the present invention.
Fig. 16 is a block diagram showing one example of the internal configuration of the mobile phone terminal functional units.
Fig. 17 is a block diagram showing a first modified example of the internal configuration of the mobile phone terminal functional units.
Fig. 18 is a block diagram showing a second modified example of the internal configuration of the mobile phone terminal functional units.
Fig. 19 is a block diagram showing the schematic configuration of the wireless communication terminal in the seventh embodiment according to the present invention.
Fig. 20 is a block diagram showing the internal configuration of the simple wireless terminal functional units.

### DESCRIPTION OF THE PREFERRED EMBODIMENTS

The wireless communication terminal according to the present invention will be specifically described, with reference to the drawings.

### (First Embodiment)

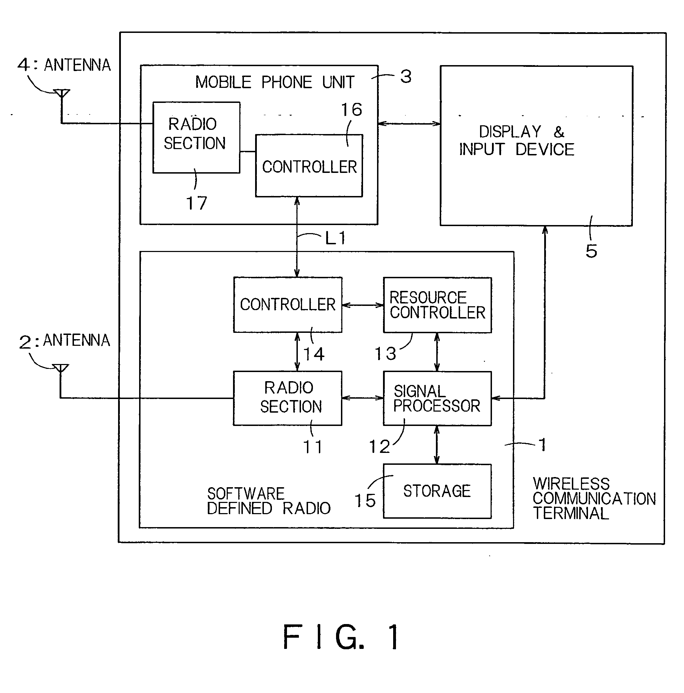

Fig. 1 is a diagram showing the schematic configuration of a wireless communication terminal according to a first embodiment of the present invention. The wireless communication terminal in Fig. 1 comprises a software defined radio 1, an antenna 2 for the software defined radio 1, a mobile phone unit 3, an antenna 2 for the mobile phone unit 3, and a display and input device 5.

The software defined radio 1 comprises: a radio section 11 for transferring wireless signals; a signal processing unit 12 having a reconfigurable unit in which the content of the signal processing for the wireless signal transferred by the radio section 11 can be changed, and a non-reconfigurable unit in which the content of the signal processing cannot be changed; a resource controller 13 which controls changing of the content of the signal processing in the reconfigurable unit in the signal processing unit 12; a controller 14 for controlling the radio section 11, the signal processing unit 12, and the resource controller 13; and a storage 15 which stores functions implemented in the signal processing unit 12 and the transferred data.

The mobile phone unit 3 being received the type approval by the official organization, has a ontroller 16 and a radio section 17 therein.

The wireless communication terminal in Fig. 1 is built into LSI for miniaturization. A processor, a memory, and a logic circuit are included in the LSI, and the processor, the memory, and the logic circuit are used to execute a variety of processing such as wireless signal processing, protocol processing, and man-machine interface processing.

The radio waves received by the antenna 2 of the software defined radio 1 are frequency-converted and digitalized by the radio section 11, and sent out to the signal processing unit 12. The signal processing unit 12 executes demodulation processing with respect to the digitalized reception signal from the radio section 11.

On the other hand, when radio waves are transferred from the antenna 2 of the software defined radio 1, after the radio waves have been modulated by the signal processing unit 12, the modulated signal is converted to a highfrequency signal by the radio section 11 and radiated from the antenna 2.

The signal processing unit 12 comprises a digital signal processor (DSP) and a rewritable logic (FPGA), as a specific mounting form. By using these DSP and FPGA, a desired functional block can be allotted flexibly.

The resource controller 13 controls setting and changes of the function of the signal processing unit 12. More specifically, the resource controller 13 comprises a resource control table for recording the status of use of resources such as memories, a resource manager, and a resource changing section, and the resource manager monitors the status of use of the resources to update the resource control table.

Based on the configuration information for realizing the function to be added newly, the resource manager comprehends the resource quantity required for realizing the function. Moreover, the resource manager comprehends the excessive resources by using the resource control table, to distribute the resources appropriately. Change of the resource function is conducted by the resource controller 13, and the changed resource function is stored in the storage 15. The storage 15 comprises a hard disk drive and a semiconductor memory.

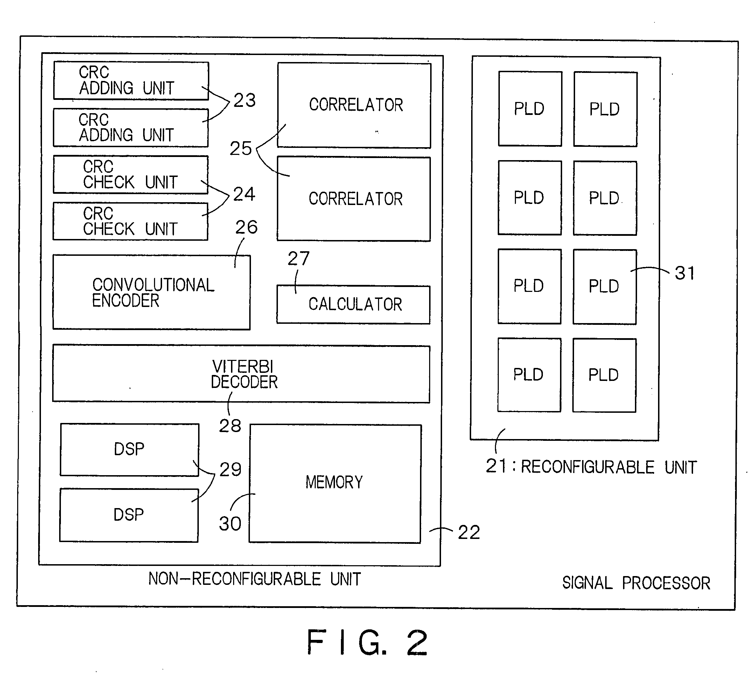

Fig. 2 is a block diagram showing one example of the internal configuration of the signal processing unit 12. As shown in the figure, the signal processing unit 12 has a reconfigurable unit 21 and a non-reconfigurable unit 22. The non-reconfigurable unit 22 comprises: a logic circuit including a CRC adding unit 23, a CRC checking unit 24, a correlator 25, a convolutional encoder 26, a calculator 27, and a Viterbi decoder 28; DSPs 29; and a memory 30. The reconfigurable unit 21 has PLDs (Programmable Logic Devices) 31 that can form an arbitrary logic circuit.

The wireless communication terminal in Fig. 1 comprises a control signal line L1 for connecting the controller 16 in the mobile phone unit 3 and the controller 14 in the software defined radio 1. This control signal line L1 transmits control signals necessary for establishing the communication from mobile phone unit 3 to software defined radio 1.

Specifically, the control signal includes broadcast information to all of the terminals and the peculiar informative information transmitted to a specific terminal. For example, the broadcast information includes information relating to the radio channel structure, information relating to control carrier configuration, system operation information, congestion restriction information, country code, system type, general calling area type, and option information.

The peculiar informative information transmitted from a base station to a specific terminal includes a channel reestablishing request, channel allocation information, rejection of channel allocation, and an incoming call.

The broadcast information is informed by a broadcast channel (a so-called B-CH). The broadcast information is transmitted by a request from a terminal or from the base station, after having established a link. There is a slight difference in the names of the above information, but corresponding information respectively exists in other wireless systems.

The broadcast information is generally transmitted by using a control message. The message format is individually specified according to the respective wireless systems.

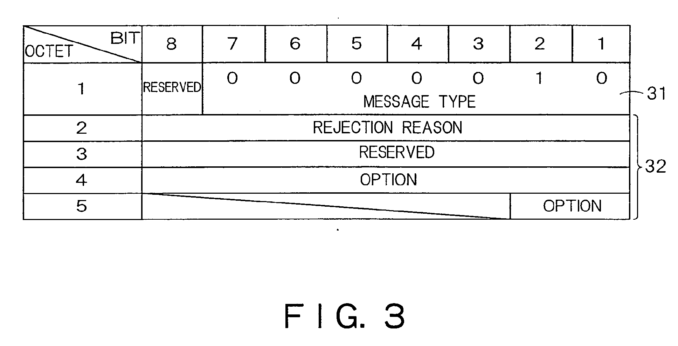

Fig. 3 illustrates one example of formats for a link channel allocation rejection message in the PHS system. This message is described in STD-28, which is the Standards of ARIB (Association of Radio Industries and Businesses). The message includes a message type 31, and information 32 accompanying the message. The message is individually and strictly defined for secret key setting, function request, response to incoming calls, radio channel cutoff, radio channel cutoff completion, radio status report, channel switching instruction, and the like.

The control information is peculiar to the wireless system. Therefore, when the communication is within a single wireless system, it is not necessary for others to comprehend the control information peculiar to the system.

In this embodiment the wireless communication terminal using the software defined radio technique can operate an application using a plurality of wireless systems. It is also possible for this wireless commutation terminal to comprehend the control information of the respective systems.

According to this embodiment, in the wireless communication terminal based on the software defined radio technique, the control information of the respective wireless systems, such as communication restriction and radio circuit transmission quality, can be comprehended, especially in the application using a plurality of wireless systems.

Information may be changed depending on the time zone for each zone, according to the control information. The zone herein stands for a general calling area and an individual cell coverage. When the information is changed depending on the lapse of time, the control information is transmitted from the controller 16 via the control line L1 to the controller 14.

Moreover, since versions can be managed with a time stamp, useful control information can be selected at all times.

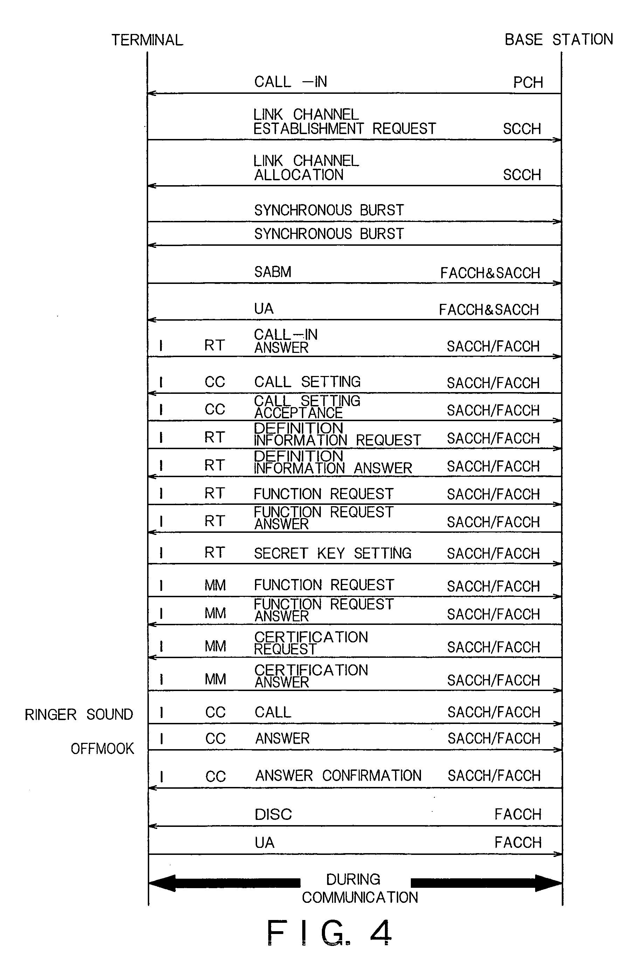

A specific transmission method of the control message will be described next. Fig. 4 shows an example of a control sequence when receiving an incoming call in the PHS. The sequence in Fig. 4 is described in STD-28, which is the Standards of ARIB, and hence detailed explanation is omitted. Communication is established through exchanges of these control signals.

The control information relating to the restriction of transmission will be described. A business proprietor who provides a telecommunication service needs to handle important communication by priority. At this time, the base station can transmit a signal for restricting transmission from general terminals, as required.

Restriction of transmission is requested, for example, by the fifth and sixth octets in the system information informative message in the PHS, by the fourth to sixth octets in the informative information message in the PDC system, and by PSIST and MSGPSIST in an access parameter message in the CDMA system. By this restriction message, for example, in the case of the PDC system, accesses to general terminals, accesses to priority terminals, accesses to other zones, accesses to own zone, and an access cycle are restricted by the base station.

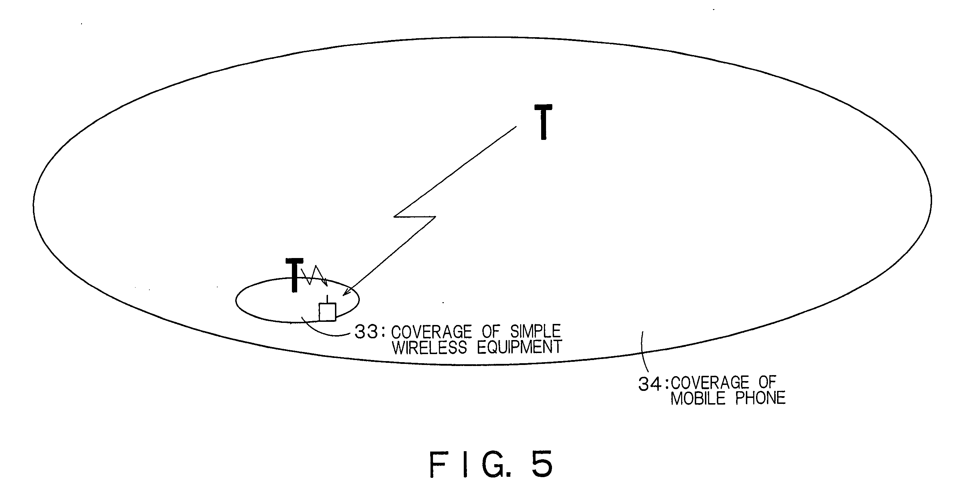

Fig. 5 indicates the cell coverage of the wireless communication terminal in Fig. 1. As shown in this figure, the cell coverage 33 for simple wireless equipment configured by software defined radio technique is very narrow as compared with the cell coverage 34 of the mobile phone (cellular), and is referred to as a spot area. This kind of spot area is provided, for example, in a train, in the vicinity of ticket gates in stations, and in the vicinity of tollgates of a highway.

The service provider who provides a variety of information transmits high-speed signals within the spot area, to provide desired information (for example, services of contents distribution and information distribution) to users having the simple wireless equipment. The simple wireless equipment is like the wireless LAN equipment, Bluetooth (TM) equipment etc. The regulations in Telecommunication Business Law for simple wireless equipments are not strict rather than cellular phones. The regulation for type approval for such simple wireless equipment is also not so strict rather than cellular phone.

Since the spot area is very narrow, the service quality by the information distribution service can be improved, by cooperating with the wireless systems having an extended area, such as the mobile phone.

The mobile phone is popularized due to the wide service area, though the signal transmission rate is limited to several kbps to several hundreds kbps.

The services of the mobile phone are developed nationally. For example, a user of wireless communication terminal this embodiment declares desired information list beforehand to the provider, by using the mobile phone unit 3, and when the user approaches a spot area, or drops in the spot area, the user obtains the desired information by software defined radio 1. In this manner, by combining the mobile phone 3 and the simple wireless equipment configured by software defined radio technique, requested service can be provided, thereby improving the convenience of the user.

In the information distribution service in the spot area, as the number of spot areas increases, the probability that the user passes by the spot area increases. Therefore, more attractive service can be provided.

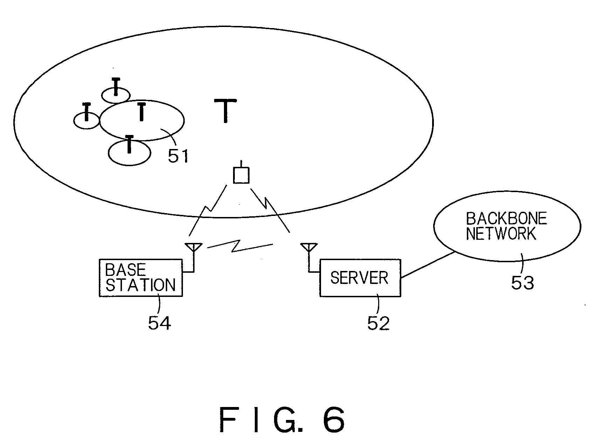

Fig. 6 shows one example of the wireless communication system using the wireless communication terminal in Fig. 1. As shown in this figure, a server 52 of a service provider who provides services in a spot area 51 is connected to a backbone network 53 by cable. This server 52 can perform wireless communication with a base station 54, which communicates with the wireless communication terminal held by a user.

In the case of the wireless communication system shown in Fig. 6, when having reached the spot area, the user can receive the service from the service provider by the simple wireless equipment, and can also receive the similar service outside the spot area, by the mobile phone unit 3.

The simple wireless equipment used in the spots provided in a plurality of numbers may be of any specification. The function of the simple wireless equipment can be arbitrarily determined by the service provider who provides the information distribution service in the spot area.

However, from the standpoint of the user, if the standards of the simple wireless equipment used in the information distribution services are different from each other, the user can receive the service only in the spot area corresponding to the simple wireless equipment possessed by the user, thereby considerably deteriorating the convenience of the user.

The software defined radio 1 can realize arbitrary simple wireless equipment by conducting wireless signal processing by the DSP or hardware that can easily change the function.

From such reasons, as shown in Fig. 1, the wireless communication terminal is constructed by combining the software defined radio 1 and the mobile phone unit 3.

The business proprietor who provides services for the mobile phone and the information distribution service provider in the spot area are generally separate vendors. The information distribution service provider in the spot area ensures a wide area by using the mobile phone to improve the serve quality.

By the way, in order to ensure important communication including an emergency communication, a mobile phone shall have a function by which it stops the origination of a call when it has received a signal from the mobile phone circuit facility requesting call restriction from mobile phone carrier. Such transmission restriction may cause a trouble such that control for providing information does not function well, for the service provider who provides information by using both of the mobile phone 3 and the simple wireless equipment. This situation is out of control for the information distribution service provider since the service provider is also user of the mobile phone network owned by the mobile phone carrier.

Even in such case, in the wireless communication terminal in Fig. 1, it is notified to the software defined radio 1 via the control signal line L1 that the mobile phone unit 3 has received a transmission restriction instruction, so that the software defined radio 1 judges whether to receive the service provided in the spot area continuously. In the first embodiment, since the software defined radio 1 and the mobile phone unit 3 are connected by the control line L1, it can be notified to the software defined radio 1 that the mobile phone unit 3 has received a transmission restriction instruction so that the user of the wireless communication terminal in Fig. 1 also can realize that the reason for the trouble if software defined radio 1 is notified the transmission restriction instruction from the mobile phone unit 3 via the control signal line L1. The software defined radio 1 can be prevented from transmitting unnecessary radio waves to the surroundings.

### (Second Embodiment)

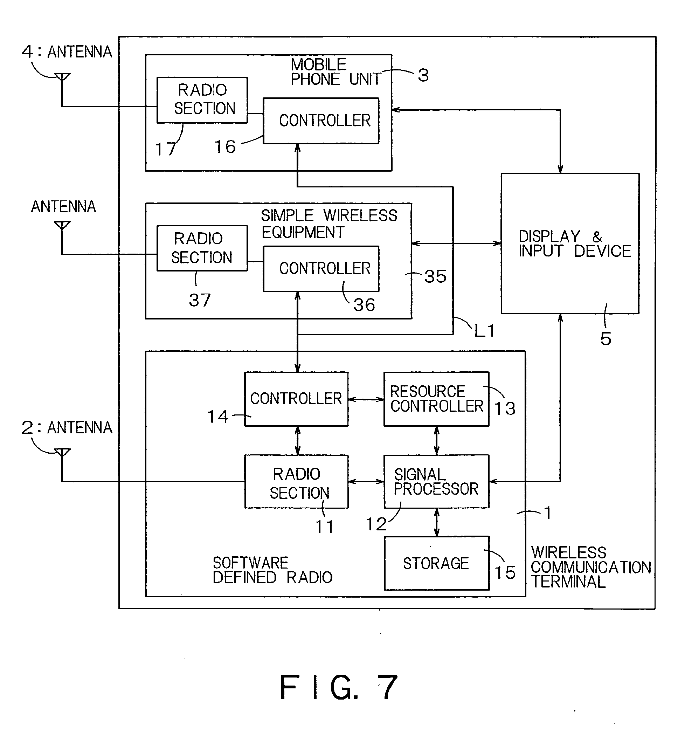

Fig. 7 is a block diagram showing the schematic configuration of a wireless communication terminal according to a second embodiment of the present invention. In Fig. 7, the like components as those in Fig. 1 are denoted by the like reference numerals, and the different points will be mainly described below.

The wireless communication terminal in Fig. 7 comprises existing simple wireless equipment (non-software defined radio) 35, the mobile phone unit 3 and the software defined radio 1. The simple wireless equipment 35 is for example Blue tooth (TM) equipment. TThe software defined radio 1 is, for example, a wireless LAN.

The simple wireless equipment 35 in Fig. 7 has a controller 36 for controlling the whole simple wireless equipment 35 and a radio section 37. The controller 36, and the controller 16 in the mobile phone unit 3 and the controller 14 in the software defined radio 1 are connected to a common control signal line L1. This control signal line L1 is used, for example, to transmit a control signal such as a signal indicating that the mobile phone unit 3 has received a transmission restriction instruction to the software defined radio 1 and the simple wireless equipment 35.

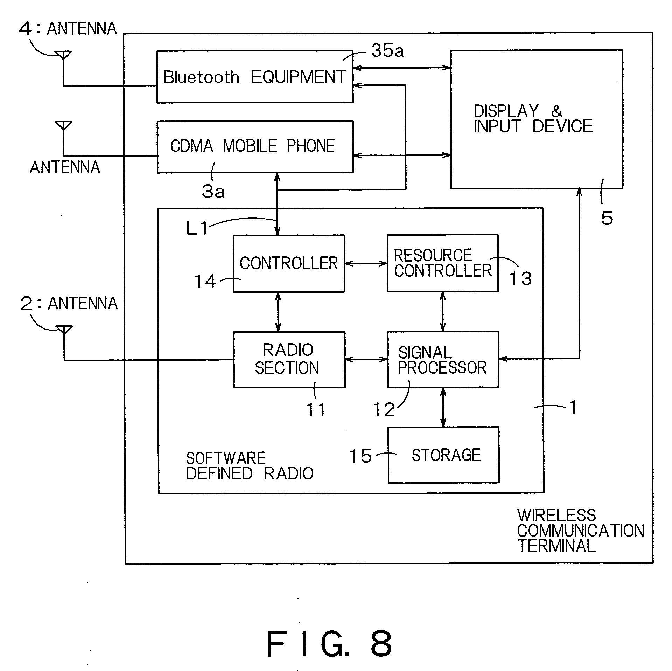

Fig. 8 is a block diagram of a wireless communication terminal, showing a specific example of Fig. 7, wherein a CDMA mobile phone unit 3a is used as the mobile phone unit, and Bluetooth (TM) equipment 35a is used as the simple wireless equipment.

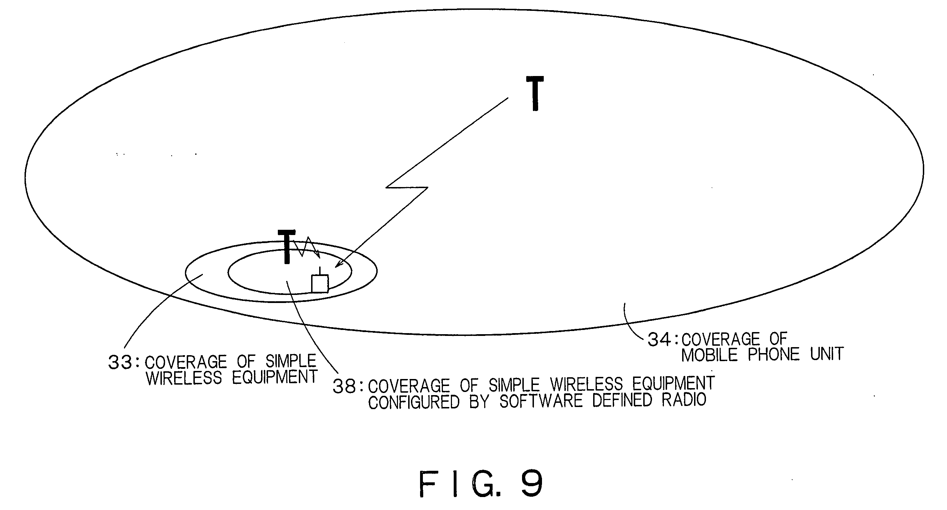

Fig. 9 is a diagram showing the cell coverage of the wireless communication terminal in Fig. 7. As shown in this figure, the cell coverage 34 of the mobile phone unit 3 is the widest, and includes therein the cell coverage 33 of the simple wireless equipment 35, in which the spot area 38, being the cell coverage of the wireless LAN configured by software defined radio 1, is included.

The information necessary for configuring the wireless LAN used in the spot area 38 by the software defined radio 1 is transmitted in the cell coverage 33.

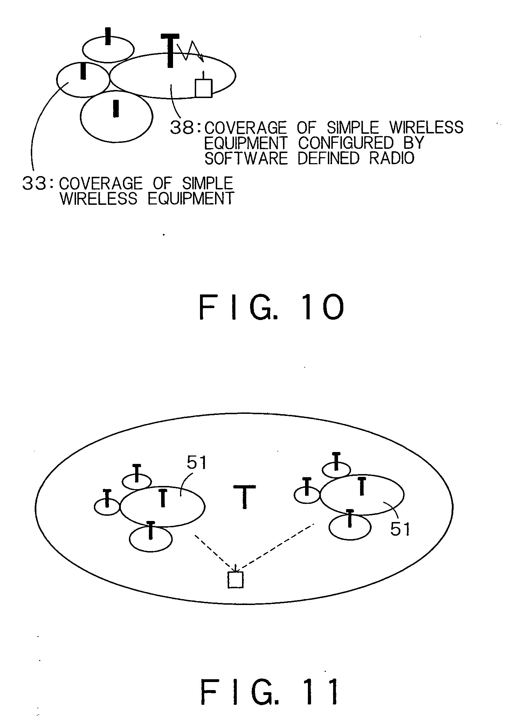

The cell coverage 33 of the simple wireless equipment 35 may be established as an annex to the spot area 38, as shown in Fig. 10. In this case, only the user who does not have the wireless equipment used in the spot area 38 needs to visit the cell coverage 33 of the simple wireless equipment 35.

For example, in the case of a spot area arranged in a station or the like, users, who use the spot area at the time of commutation every day, may have the wireless equipment configured and already customized by the software defined radio lusable in the spot area. On the other hand, a user, who uses the spot area for the first time due to a business trip or the like, may not have such wireless equipment usable in the spot area. If user who has configurable wireless equipment like software defined radio 1, he or she drops by the spot area 38 once and gets the information necessary for configuring the equipment.

The service provider requires personal information, such as authentication procedure, with respect to the user accessing to the spot area. For this purpose, a roaming service used in the mobile phone 3 may be used. In other words, the service provider uses an identification number of a user terminal obtained by the communication using the mobile phone 3 or the simple wireless equipment 35, to refer to the server, in which the user has registered, via the network, thereby obtaining the personal information of the user.

In the second embodiment, the mobile phone 3 and the simple wireless equipment 35 are provided in addition to the software defined radio 1. The controllers 16 in the mobile phone unit 3, the controller 36 in the simple wireless equipment 35, and the controller 14 in the software defined radio 1 are connected to the control signal line L1, so that it can be informed to the simple wireless equipment 35 and the software defined radio 1 that the mobile phone unit 3 has received a transmission restriction instruction.

Moreover, even when the software defined radio 1 does not correspond to the communication service provided in the spot area, authentication is performed by using the simple wireless equipment 35 and the mobile phone unit 3, so that the it can receive the communication service in the spot area, thereby improving the convenience of the user.

Fig. 11 is a diagram showing one example of a wireless communication system using the wireless communication terminal shown in Fig. 7. The wireless communication terminal in Fig. 11 has a plurality of spot areas 51 where different service providers provide services. The user can receive the service provided by the different service providers, while traveling these spot areas 51.

The communication service in the spot area described above becomes more powerful by cooperating with the PDA or the like.

### (Third Embodiment)

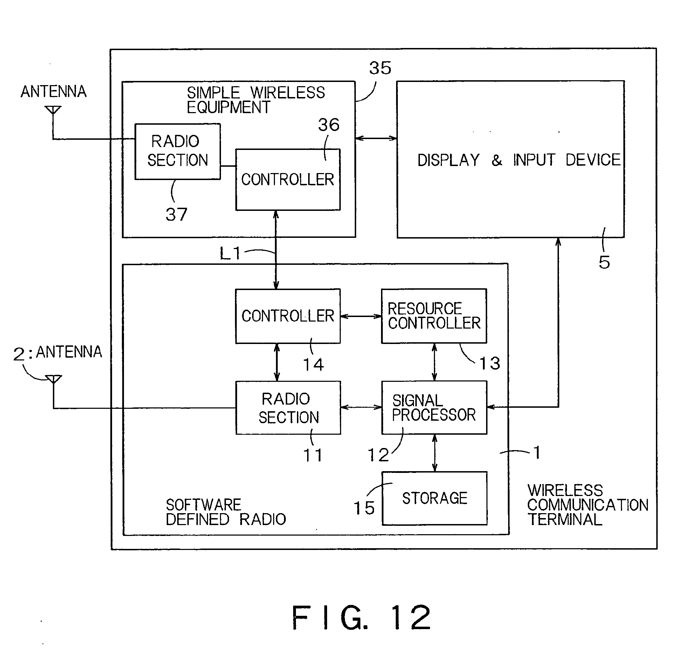

Fig. 12 is a block diagram showing the schematic configuration of a wireless communication terminal according to a third embodiment of the present invention. In Fig. 12, the like components as those in Fig. 1 are denoted by the like reference numerals, and the different points will be mainly described below.

In the wireless communication terminal in Fig. 12, the mobile phone unit is configured by the software defined radio 1, and existing wireless equipment (non-software defined radio) is used as the simple wireless equipment 35. The controller 14 in the software defined radio 1 and the controller 36in the simple wireless equipment 35 are connected by the control signal line L1. This control signal line L1 is used, for example, to inform the simple wireless equipment 35 that the mobile phone 3 has received the transmission restriction instruction.

### (Fourth Embodiment)

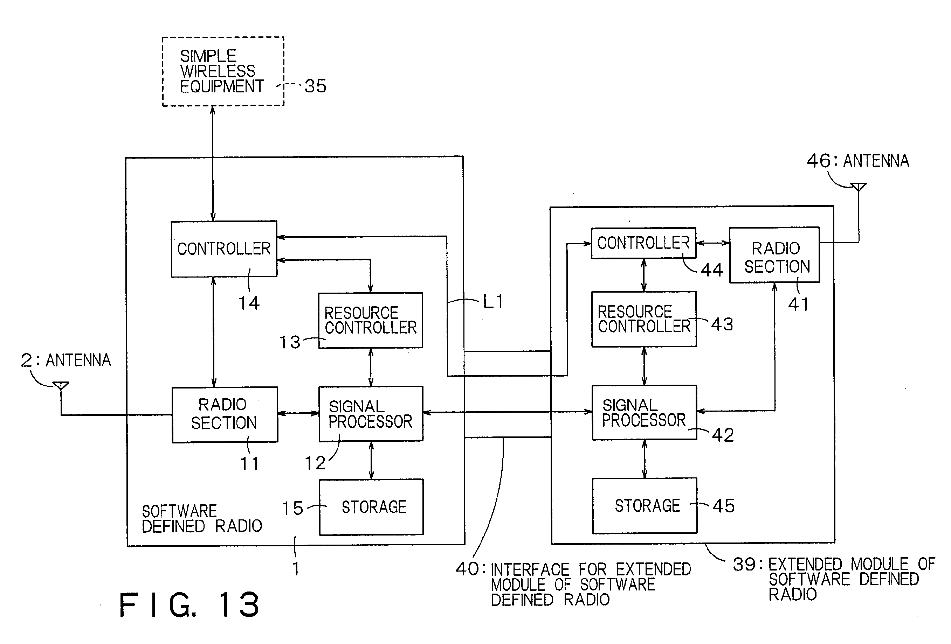

Fig. 13 is a block diagram showing the schematic configuration of a wireless communication terminal according to a fourth embodiment of the present invention. In Fig. 13, the like components as those in Fig. 1 are denoted by the like reference numerals, and the different points will be mainly described below.

The software defined radio 1 has such a feature that it can correspond to a plurality of wireless systems by using the hardware as it is, but in order to improve the versatileness, it is desirable that replacement or addition of the signal processing unit 12 be possible. Therefore, the wireless communication terminal in Fig. 13 comprises an extended module 39 for extending the function of the software defined radio 1, and an interface section 40 for transferring signals between the software defined radio 1 and the extended module 39.

The extended module 39 has a configuration generally the same as that of the software defined radio 1, and comprises a radio section 41, a signal processing unit 42, a resource controller 43, a controller 44, a memory 45, and an antenna 46.

The internal configuration of the extended module 39 is not limited to the one illustrated in Fig. 13. For example, the radio section 41 and the antenna 46 may not be provided. Further, the number of the extended modules 39 connected to the software defined radio 1 is not limited to one, and a plurality of extended modules 39 may be connected thereto.

The signal processing unit 12 in the software defined radio 1 and the signal processing unit 42 in the extended module 39 can transfer signals to each other, and the controller 14 in the software defined radio 1 and the controller 44 in the extended module 39 are connected to each other by the control signal line L1.

This control signal line L1 is used, for example, to inform the extended module 39 that the mobile phone 3 has received the transmission restriction instruction.

As shown by the dotted line in Fig. 13, existing simple wireless equipment 35 (non-software defined radio) may be connected to the software defined radio 1. In this case, if the controller 14 in the simple wireless equipment 35 is also connected to the control signal line L1, the simple wireless equipment 35 can be notified the transmission restriction via line L1. The software defined radio 1 can be prevented from transmitting unnecessary radio waves to the surroundings.(Fifth Embodiment)

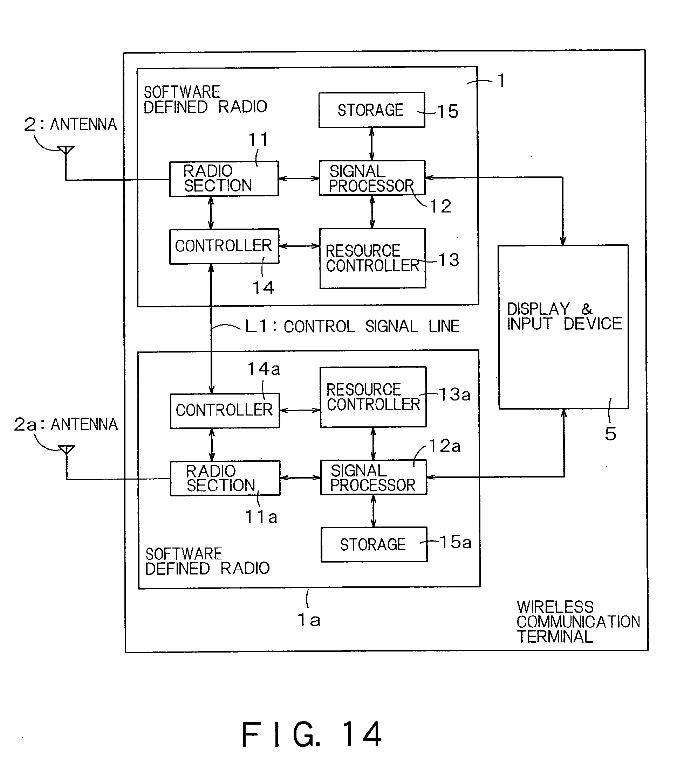

Fig. 14 is a block diagram showing the schematic configuration of a wireless communication terminal according to a fifth embodiment of the present invention. In Fig. 14, the like components as those in Fig. 1 are denoted by the like reference numerals, and the different points will be mainly described below.

The wireless communication terminal in Fig. 14 comprises a plurality of software defined radio 1, 1a. The both units 1 and 1a in the wireless communication terminal are formed of software defined radio technology. For example, the mobile phone unit is built in one of the software defined radio 1, the simple wireless equipment is built in the other software defined radio 1a, and the controllers 14 and 14a are connected by the control signal line L1.

By the configuration as shown in Fig. 14, it can be informed to the other software defined radio 1a that the mobile phone has received the transmission restriction instruction, via the control signal line L1. The software defined radio 1a is notified the transmission restriction instruction.

### (Sixth Embodiment)

In a sixth and a seventh embodiments described below, unnecessary radio wave transmission can be reliably prevented in a desired case, even if there is no obligation to suspend transmission of wireless signals.

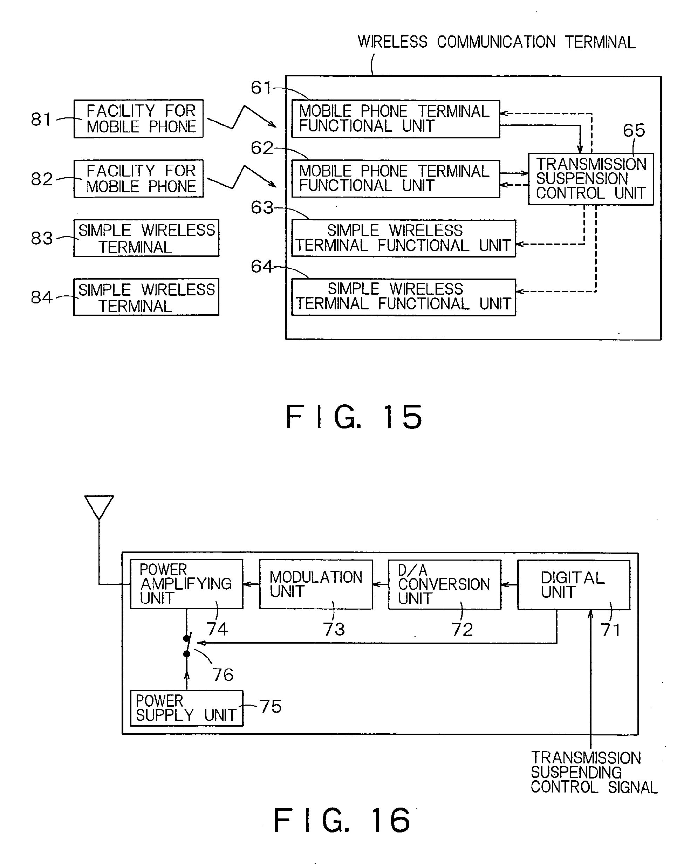

Fig. 15 is a block diagram showing the schematic configuration of a wireless communication terminal according to the sixth embodiment of the present invention. The wireless communication terminal in Fig. 15 comprises a plurality of mobile phone terminal functional units 61 and 62, respectively provided corresponding to a plurality of wireless systems, a plurality of simple wireless terminal functional units 63 and 64, respectively provided corresponding to the plurality of wireless systems, and a transmission suspension control unit 65 that controls transmission suspension of radio waves from the mobile phone terminal functional units 61 and 62 and the simple wireless terminal functional units 63 and 64.

The mobile phone terminal functional units 61 and 62 stand for W-CDMA, PDC (Personal Digital Cellular, which is the name of Japanese cellular system.), or PHS, and has an obligation to suspend transmission of radio waves under a predetermined condition (for example, when a transmission suspending instruction is given from a base station, when the receiver sensitivity decreases, when the terminal functional unit has a failure, or when a transmission suspending instruction is issued for ensuring important communication). The mobile phone terminal functional units 61 and 62 perform wireless communication with a corresponding facility for mobile phones (for example, base stations) 81 and 82.

The simple wireless terminal functional units 63 and 64 stand for a wireless LAN or Bluetooth (TM), which do not have a particular obligation to suspend transmission of radio waves. The simple wireless terminal functional units 63 and 64 respectively perform wireless communication with the corresponding other simple wireless terminals 83 and 84.

The transmission suspension control unit 65 receives a transmission suspending signal output from any one of the plurality of mobile phone terminal functional units 61 and 62, and transmits a transmission suspension control signal which instructs transmission suspension of radio waves with respect to all other mobile phone terminal functional units 61 and 62 and the simple wireless terminal functional units 63 and 64.

Fig. 16 is a block diagram showing one example of the internal configuration of the mobile phone terminal functional units 61 and 62, and the simple wireless terminal functional units 63 and 64. As shown in the figure, the mobile phone terminal functional units 61 and 62, and the simple wireless terminal functional units 63 and 64 respectively comprise: a digital unit 71 which generates a digital transmission signal by performing digital signal processing; a D/A conversion unit 72 which converts the digital transmission signal into an analog transmission signal; a modulation unit 73 which performs orthogonal modulation, filtering and frequency conversion of the analog transmission signal to generate a modulation signal; a power amplifying unit 74 which amplifies power of the modulation signal and supplies the signal to an antenna; a power supply unit 75 which supplies power at least to the power amplifying unit 74; and a transmission suspending unit 76 which suspends transmission of radio waves, upon reception of a transmission suspension control signal.

The digital unit 71 may be formed of a dedicated chip such as ASIC for performing various kinds of signal processing such as error correction, or may be realized by software processing by using a universal chip such as CPU.

Upon reception of a transmission suspension control signal, the digital unit 71 suspends the generation processing of a digital transmission signal, and supplies a transmission suspending signal to the transmission suspending unit 76. The transmission suspending unit 76 is formed of, for example, a power switch, and upon reception of the transmission suspending signal, suspends power supply from the power supply unit 75 to the power amplifying unit 74.

The transmission suspending unit 76 may supply power not only to the power amplifying unit 74 but also to at least one of the digital unit 71, the D/A conversion unit 72, and the modulation unit 73. In this case, the transmission suspending unit 76 prevents power from being supplied from the power supply unit 75 to the respective sections.

As described above, in the sixth embodiment, when either one of the mobile phone terminal functional units 61 and 62 suspends transmission of radio waves, the transmission suspension control unit 65 transmits a transmission suspension control signal to all other mobile phone terminal functional units 61 and 62, and the simple wireless terminal functional units 63 and 64. The mobile phone terminal functional units 61 and 62, and the simple wireless terminal functional units 63 and 64 having received this transmission suspension control signal suspend the operation of the digital unit 71, and suspend power supply to the power amplifying unit 74, thereby suspending transmission of radio waves reliably. As a result, unnecessary radio wave transmission can be avoided, important communication is not interrupted, and radio wave transmission including noise at the time of failure can be also avoided.

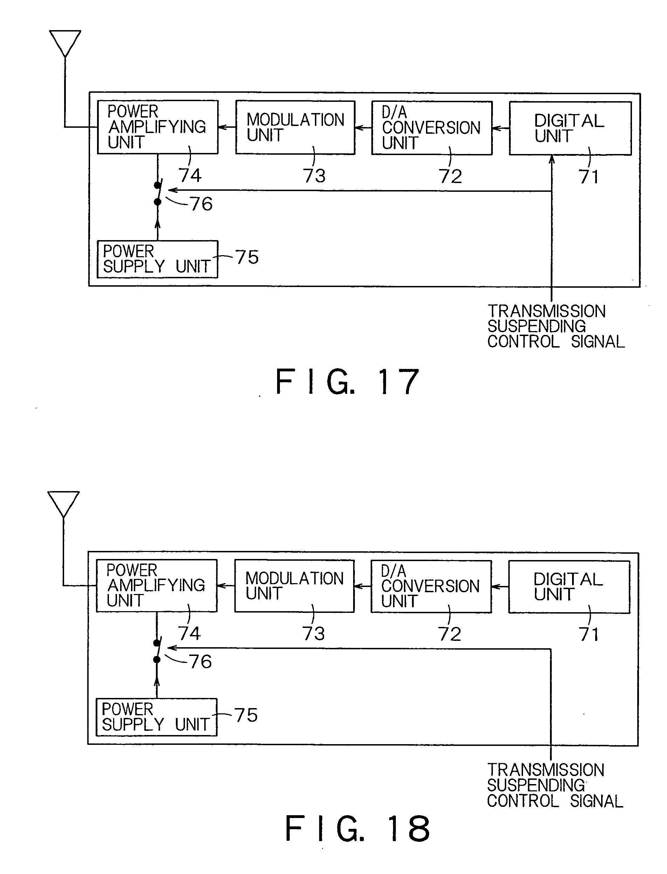

The mobile phone terminal functional units 61 and 62, and the simple wireless terminal functional units 63 and 64 are not necessarily constituted as shown in Fig. 16, and some modified examples can be considered. For example, Fig. 17 is a block diagram showing a first modified example of the internal configuration of the mobile phone terminal functional units 61 and 62, and the simple wireless terminal functional units 63 and 64. In Fig. 17, differing from Fig. 16, the transmission suspension control signal from the transmission suspension control unit 65 is supplied to the digital unit 71, and also to the transmission suspending unit 76.

The transmission suspending unit 76 switches whether or not to supply power to the power amplifying unit 74, based on the transmission suspension control signal from the transmission suspension control unit 65.

In the first modified example, since it is not necessary to output the transmission suspending signal from the digital unit 71 to the transmission suspending unit 76, the processing load of the digital unit 71 is reduced.

Fig. 18 is a block diagram showing a second modified example of the internal configuration of the mobile phone terminal functional units 61 and 62, and the simple wireless terminal functional units 63 and 64. In Fig. 18, different from Fig. 16, the transmission suspension control signal from the transmission suspension control unit 65 is supplied only to the transmission suspending unit 76. The operation of the transmission suspending unit 76 is the same as in Fig. 16, but since the transmission suspension control signal is not input to the digital unit 71, the digital unit 71 performs signal processing at all times.

Therefore, even if the transmission suspending instruction is received, the digital unit 71, the D/A conversion unit 72, and the modulation unit 73 continue operation. However, since power is not supplied to the power amplifying unit 74, radio wave is not transmitted.

In the second modified example, the power consumption increases as compared with the examples shown in Fig. 16 and Fig. 17, but the processing load of the digital unit 71 is further simplified.

### (Seventh Embodiment)

In a seventh embodiment, detecting a failure of the simple wireless terminal functional unit is conducted.

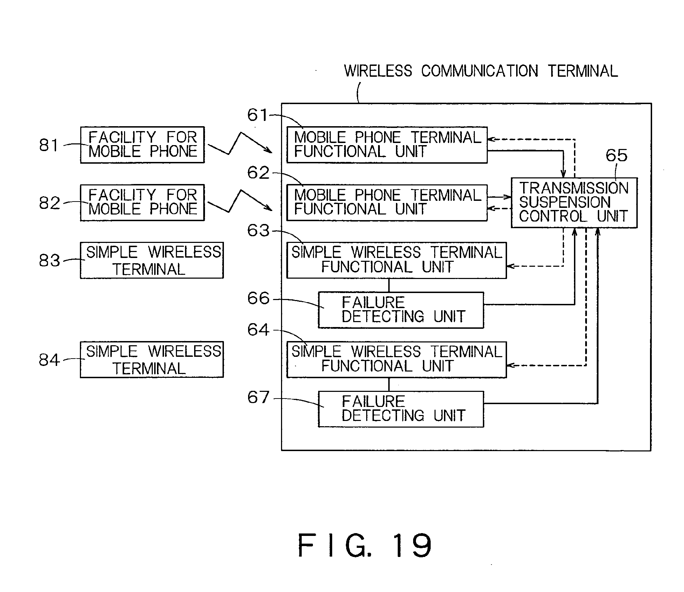

Fig. 19 is a block diagram showing the schematic configuration of the wireless communication terminal in the seventh embodiment according to the present invention. In Fig. 19, the like components as those in Fig. 15 are denoted by the like reference numerals, and the different points will be mainly described below.

The wireless communication terminal in Fig. 19 has failure detecting units 66 and 67, which respectively detect whether the simple wireless terminal functional unit 63 or 64 has a failure. When either one of the simple wireless terminal functional units 63 and 64 has a failure, the corresponding failure detecting unit 66 or 67 supplies a transmission suspending signal to the transmission suspension control unit 65.

Upon reception of the transmission suspending signal from either one of the mobile phone terminal functional units 61 and 62, and the simple wireless terminal functional units 63 and 64, the transmission suspension control unit 65 supplies a transmission suspension control signal to all of the mobile phone terminal functional units 61 and 62, and the simple wireless terminal functional units 63 and 64.

The mobile phone terminal functional units 61 and 62, and the simple wireless terminal functional units 63 and 64 are formed in the same manner as shown in Fig. 16 to Fig. 18.

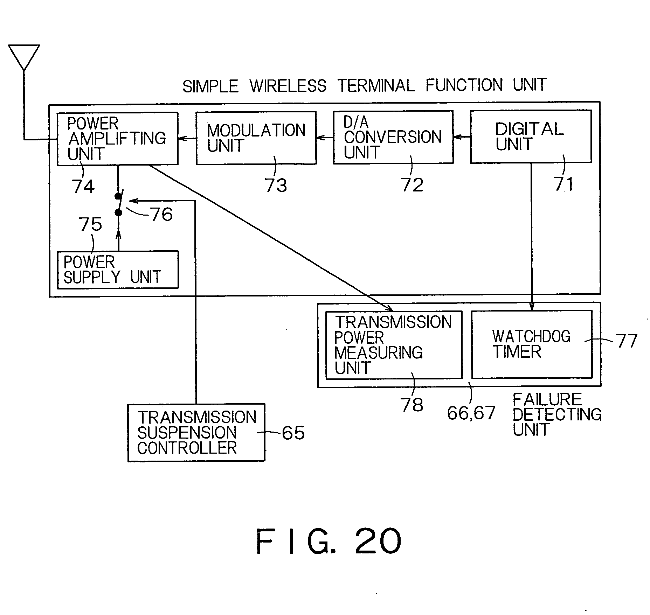

Fig. 20 is a block diagram showing the internal configuration of the simple wireless terminal functional units 63 and 64, and the failure detecting units 66 and 67, which detects a failure in the simple wireless terminal functional units 63 and 64. In Fig. 20, an example in which the simple wireless terminal functional units 63 and 64 are constructed as shown in Fig. 16, but these may be constructed as shown in Fig. 17 or Fig. 18.

The failure detecting units 66 and 67 comprise a watchdog timer 77 which judges whether the digital unit 71 in the corresponding simple wireless terminal functional unit 63 or 64 has a failure, and a transmission power measuring unit 78 which judges whether the power amplifying unit 74 has a failure.

The digital units 71 in the simple wireless terminal functional units 63 and 64 output an operating condition report signal at a predetermined time interval. When the operating condition report signal is not output at the predetermined time interval from the digital unit 71, there is a high possibility that the corresponding simple wireless terminal functional unit 63 or 64 is malfunctioning, and hence the watchdog timer 77 judges that the simple wireless terminal functional unit 63 or 64 has a failure.

The transmission power measuring unit 78 monitors amplified power in the power amplifying unit 74, and if the amplified power is not within a defined value, it judges that the power amplifying unit 74 has a failure.

When at least one of the watchdog timer 77 and the transmission power measuring unit 78 judges that there is a failure, the failure detecting units 66 and 67 supply a transmission suspending signal to the transmission suspension control unit 65.

Upon reception of the transmission suspending signal, the transmission suspension control unit 65 supplies a transmission suspension control signal to all of the mobile phone terminal functional units 61 and 62, and the simple wireless terminal functional units 63 and 64, and the respective functional units having received this signal instruct the transmission suspending unit 76 to suspend power supply from the power supply unit 75 to the power amplifying unit 74.

As described above, in the seventh embodiment, since the failure detecting units 66 and 67 which detect a failure in the simple wireless terminal functional units 63 and 64 are provided, when either one of the simple wireless terminal functional units 63 and 64 has a failure, transmission of radio waves from all of the mobile phone terminal functional units 61 and 62, and the simple wireless terminal functional units 63 and 64 in the wireless communication terminal can be suspended. As a result, even when the mobile phone terminal functional units 61 and 62 are affected by a failure in the simple wireless terminal functional units 63 and 64, such as the wireless LAN system or the Bluetooth (TM) equipment, since radio wave is not transmitted from the mobile phone terminal functional units 61 and 62, an influence to the outside can be avoided.

In the respective embodiments described above, the number of the mobile phone terminal functional units 61 and 62 and the simple wireless terminal functional units 63 and 64 included in the wireless communication terminal is not particularly limited. The mobile phone terminal functional units 61, 62 and the simple wireless terminal functional units 63, 64 can be configured by software defined radio. At least only one each of the mobile phone terminal functional units 61 and 62 and the simple wireless terminal functional units 63 and 64 needs to be provided. Further, there is no particular limitation on the kind of the specific wireless system of the mobile phone terminal functional units 61 and 62 and the simple wireless terminal functional units 63 and 64 .

## Claims

1. A wireless communication terminal, comprising:
a software defined radio having a first wireless unit which transfers a wireless signal, a signal processor including a reconfigurable unit being able to change signal processing contents of the wireless signal transferred by said first wireless unit a signal processing controller which controls reconfiguration of the signal processing contents for said reconfigurable unit, and a first controller which controls said signal processor and said signal processing controller;
a cellular type wireless equipment having a second wireless unit which transfers a wireless signal by a cellular method, and a second controller which controls said second wireless unit; and
a control signal line which transfers a control signal necessary for establishment of communication between said first and second controllers.

2. A wireless communication terminal, comprising:
a first software defined radio having a first wireless unit which transfers a wireless signal, a signal processor including a reconfigurable unit being able to change signal processing contents of the wireless signal transferred by said first wireless unit, a signal processing controller which controls reconfiguration of the signal processing contents for said reconfigurable unit, and a first controller which controls said first wireless unit, said signal processor and said signal processing controller;
a second software defined radio having a second wireless unit which transfers the wireless signal in a range narrower than a cellular type equipment, and a second controller which controls said second wireless unit; and
a control signal line which transfers a control signal necessary for establishment of communication between said first and second controllers.

3. The wireless communication terminal according to either of claims 1 or 2, wherein said control signal line transfers said control signal indicating that said cellular type wireless unit has taken restriction of transmission, from said second controller to said first controller.

4. A wireless communication terminal, comprising:
a software defined radio having a first wireless unit which transfers a wireless signal, a signal processor including a reconfigurable unit being able to change signal processing contents of a wireless signal transferred by said first wireless unit, a signal processing controller which controls reconfiguration of the signal processing contents for said reconfigurable unit, and a first controller which controls said first wireless unit, said signal processor and said signal processing controller;
a cellular type wireless equipment having a second wireless unit which transfers the wireless signal by a cellular method, and a second controller which controls said second wireless unit;
a simple wireless equipment having a third wireless unit which transfers the wireless signal in a range narrower than said cellular type wireless equipment, and a third controller which controls said third wireless unit; and
a control signal line which transfers a control signal necessary for establishment of communication between said first, second and third controllers.

5. The wireless communication terminal according to claim 4, wherein said software wireless terminal can operate as a cellular type wireless equipment; and
said control signal line transfers said control signal indicating that said software defined radio has taken restriction of transmission, from said first controller to said second and third controllers.

6. A wireless communication terminal, comprising:
a first software wireless terminal having a first wireless unit which transfers a wireless signal, a first signal processor including a first reconfigurable unit being able to change signal processing contents of the wireless signal transferred by said first wireless unit, a first signal processing controller which controls redefinition of the signal processing contents for said first reconfigurable unit, and a first controller which controls said first wireless unit, said first signal processing unit and said first signal processing controller;
a second software wireless terminal having a second wireless unit which transfers a wireless signal, a second signal processor including a second reconfigurable unit which can change signal processing contents of the wireless signal transferred by said second wireless unit, a second signal processing controller which controls reconfiguration of the signal processing contents of said second reconfigurable unit, and a second controller which controls said second wireless unit, said second signal processing unit and said second signal processing controller; and
a control signal line which transfers a control signal necessary for establishment of communication between said first and second controller.

7. The wireless communication terminal according to claim 6, wherein said first software defined radio has a function of a cellular type wireless equipment which transfers a wireless signal by a cellular method;
said second software defined radio has a function of a simple wireless equipment which transfers a wireless signal in a range narrower than the cellular method; and
said control signal line transfers said control signal indicating that said first software defined radio has taken restriction of transmission, from said first controller to said second controller.

8. The wireless communication terminal according to claim 6, further comprising an interface circuit which transfers a signal including said control signal between said first and second software wireless terminals; and
wherein said second software defined radio is connected to said first software defined radio in detachable manner, and transfers signal processing contents between said first and second signal processors, via said interface circuit.

9. The wireless communication terminal according to any of claims 1, 2, 4 or 6, wherein said control signal includes at least one of information relating to a wireless channel structure, information relating to carrier configuration for control, system operational information, congestion restriction information, country code information, wireless system type information, general calling area type information, channel re-establishment request information, channel allocation notification, and channel allocation.

10. A wireless communication terminal, comprising:
at least one of first transferring units each being provided corresponding to each of at least one of wireless systems to which transmission suspension obligation of radio wave is imposed on a condition prescribed in advance;
at least one of second transferring units each being provided corresponding to each of at least one of wireless systems to which transmission suspension obligation or radio wave is not imposed; and
a transmission suspension controller which when at least one of said first transferring units stops transmission of radio wave by said transmission suspension obligation, supplies a transmission suspension control signal indicating transmission suspension of radio wave for all the other said first and second transferring units;
said first and second transferring units which received said transmission suspension control signal have transmission suspension units which suspend transmission of radio wave, respectively.

11. The wireless communication terminal according to claim 10, wherein said first transferring unit includes:
a digital unit which receives said transmission suspension control signal, and performs digital signal processing to generate a digital transmission signal;
a D/A converter which converts said digital transmission signal into an analog transmission signal;
a modulator which performs modulation processing for said analog transmission signal to generate a modulation signal;
a power amplifier which performs power amplification of said modulation signal; and
a power supply unit which supplies power to at least said power supply unit;
wherein said digital unit suspends generation processing of said digital transmission signal and outputs a transmission suspension signal to said transmission suspension unit, upon receiving said transmission suspension control signal.

12. The wireless communication terminal according to claim 10, wherein said first transferring unit includes:
a digital unit which receives said transmission suspension control signal and performs digital signal processing to generate a digital transmission signal;
a D/A converter which converts said digital transmission signal into an analog transmission signal;
a modulator which performs modulation processing for said analog transmission signal to generate the modulation signal;
a power amplifier which performs power amplification of said modulation signal; and
a power supply unit which supplies power to at least said power amplifier,
wherein said digital unit suspends generation processing of said digital transmission signal, upon receiving said transmission suspension control signal; and
said transmission suspension unit suspends power supply for at least said power amplifier, upon receiving said transmission suspension control signal.

13. The wireless communication terminal according to claim 10, wherein said first transferring unit includes:
a digital unit which performs digital signal processing to generate a digital transmission signal;
a D/A converter which converts said digital transmission signal into an analog transmission signal;
a modulator which performs modulation processing for said analog transmission signal to generate a modulation signal;
a power amplifier which performs power amplifier of said modulation signal; and
a power supply unit which supplies power to at least said power amplifier,
wherein said transmission suspension unit suspends power supply for at least said power amplifier, upon receiving said transmission suspension control signal.

14. A wireless communication terminal, comprising:
at least one of first transferring units each being provided corresponding to each of at least one of wireless systems to which transmission suspension obligation of radio wave is imposed on a condition prescribed in advance;
at least one of second transferring units each being provided corresponding to each of at least one of wireless systems to which transmission suspension obligation of radio wave is not imposed;
at least one of failure detectors each being provided corresponding to' each of said second transferring units, which detect a failure of the corresponding second transferring unit; and
a transmission suspension controller which supplies a transmission suspension control signal to all of said first and second transferring units, when determined to be failed by at least one of said failure detectors,
wherein said first and second transferring units have transmission suspension units which suspend transmission of radio wave, upon receiving said transmission suspension control signal.

15. The wireless communication terminal according to claim 14, wherein said second transferring unit includes:
a digital unit which performs digital signal processing to generate a digital transmission signal, and outputs an operational status report signal for every a prescribed time interval;
a D/A converter which converts said digital transmission signal into an analog transmission signal;
a modulator which performs modulation processing for said analog transmission signal to generate the modulation signal;
a power amplifier which performs power amplifier of said modulation signal; and
a power supply unit which supplies power to at least said power amplifier,
wherein said failure detector includes:
a first failure determination unit which determines whether or not said digital unit is out of order depending on whether or said operational status report signal is received for every a prescribed time interval; and
a second failure determination unit which measures an amplified power of said power amplifier, and determines whether or not to be out of order depending on whether or not a measured value is within a prescribed power range; and
said transmission suspension controller outputs said transmission suspension control signal, when at least one of said first and second failure determination units determines to be out of order.

16. The wireless communication terminal according to claim 14, wherein said first failure determination unit determines to be out of order when said operational status report signal is not received for every a prescribed time interval; and
said second failure determination unit determines to be out of order when said amplified power of said power amplifier is not within a range of a prescribed value prescribed in advance.
